# EUROPÄISCHE PATENTSCHRIFT

(11) **EP 1 367 108 B1**
(45) Veröffentlichungstag und Bekanntmachung des Hinweises auf die Patenterteilung: **05.04.2006**
(21) Anmeldenummer: 03010354.3
(22) Anmeldetag: 08.05.2003
(51) Int. Cl.: C09J 7/02

(54) **Handeinreissbares Klebeband mit einer weiterreissbaren Folie als Trägermaterial**
Hand-tearable adhesive tape comprising a tearable support
Ruban adhésif déchirable comprenant un support déchirable à la main

(30) Priorität: 28.05.2002 DE 10223634
(43) Veröffentlichungstag der Anmeldung: 03.12.2003
(73) Patentinhaber: tesa AG, 20253 Hamburg (DE)
(72) Erfinder: Hoelger, Christof-Gottfried, 77749 Hohberg (DE)

(56) Entgegenhaltungen:
- DE-B- 1 008 846
- DE-C- 4 318 277
- FR-A- 1 522 942
- US-A- 4 581 087

## Beschreibung

Die vorliegende Erfindung betrifft die Verwendung ein Klebebands mit einer weiterreißbaren Folie als Trägermaterial, auf die einseitig oder beidseitig eine Klebemasse aufgetragen ist.

Für den Gebrauch von Klebebändern wichtige Eigenschaften sind die leichte Handeinreißbeit bei der Ablängung von der Rolle vor der Verklebung und die rückstandsfreie und schnell durchführbare leichte Entfernbarkeit des Klebebandes nach dem Gebrauch.

Während die rückstandsfreie Entfernbarkeit auch auf die Klebmasse oder andere Funktionsschichten des Klebebandes zurückzuführen sind, so basieren Reißfestigkeit und die Handeinreißbarkeit wesentlich auf den physikalischen Eigenschaften des verwendeten Trägermaterials, zum Beispiel der Dehnbarkeit und der Zugfestigkeit.

Materialien mit einer geringen Zugfestigkeit neigen bei der Entfernung des Klebebandes zu Abrissen und erschweren diesen Arbeitsgang dadurch erheblich.

In Selbstklebebändem für allgemeine Anwendungen wie Fixieren, Bündeln, Markieren, Reparieren, Abdichten oder Verschließen ist die Verwendung von textilen Trägermaterialien gebräuchlich. Der textile Träger verbindet ideal die Eigenschaften einer hohen Zugfestigkeit mit einer guten Handeinreißbarkeit. Einschränkungen für die Verwendung der textilen Träger ergeben sich häufig aufgrund ihres Preises und ihrer Dicke.

Für Abdeckklebebänder im Maler und Lackierbereich werden bevorzugt imprägnierte Papierträger und dann solche eingesetzt, die durch das Flächengewicht des Trägers, die Art des verwendeten Zellstoffes, den Mahlgrad und bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.

Papierträger sind im allgemeinen sehr gut handeinreißbar, Einschränkungen bei der Verwendung von Papierträgern ergeben sich häufig aufgrund der stark reduzierten Festigkeit der Papierträger bei Feuchtigkeitseinfluß, zum Beispiel auch im Außenbereich, weiterhin sind Papierträger nachteilig in Fällen, in denen für die Qualität der Farbkante eine geringste Dicke des Trägers gefordert wird

Geprägte Folien aus PVC finden als Abdeckband Anwendung im Malerbereich, die Folie zeigt eine ausgezeichnete Feuchtigkeitsbeständigkeit, die besonders für die Anwendung im Außenbereich nützlich ist. Die Prägung der Folie stellt die Handeinreißbarkeit der Folie sicher und erleichtert entscheidend die Verarbeitbarkeit:

Weiterhin werden dünne Folien als sogenannte Putzbänder eingesetzt, die Klebebänder lassen sich von Hand einreißen. Dünne Folien mit niedriger Reißkraft, hoher Dehnung und der daraus resultierenden Tendenz zum neck-in sind wegen der fehlenden Dimensionsstabilität beim Abkleben nachteilig, zudem werden sie an der Abrißstelle stark gedehnt und weisen eine stark verformte, gewellte Abrißkante auf, die aus optischen Gründen und ebenfalls für den Einsatz als Maler- oder Lackierband nachteilig ist.

Im Lackierbereich werden Klebebänder mit Folienträger (zum Beispiel tesa ® 4104) als Lackierband eingesetzt, besonders, wenn hohe Anforderungen an die Farbkante gestellt werden. Wegen der mangelnden Handeinreißbarkeit müssen bei der Applikation Hilfsmittel zum Ablängen eingesetzt werden.

Für diese Anwendungen sind auch Folien, die aufgrund ihrer geringen Dehnung und Reißkraft gut von Hand abgelängt werden können, als Träger für Klebebänder bekannt (tesa ® 7164, Finelinesortiment). Diese Folien sind allerdings sehr teuer.

Mit der DE 43 18 277 C1 ist die Verwendung von Zackenschnittmessem zum Längsschneiden von doppelseitig klebenden Selbstklebebändern mit PP-Trägem bekannt geworden, die insbesondere als Teppichverlegeband Verwendung finden.

Bevorzugt weisen die Zacken des Zackenschnittmessers eine Zackenhöhe von 0,3 bis 6 mm, insbesondere 0,4 bis 1 mm auf. Aufgrund der sich daraus ergebenden Zackung der Schnittkante erhöht sich die Handeinreißbarkeit des Klebebands. Für die Anwendung im Maler und Lackierbereich sind solche gezackten Kanten natürlich wegen des uner-wünschten Abbildung der Zacken auf die Farbkante ungeeignet. Des weiteren neigen derartige Klebebänder bei der Lagerung zur Verschmutzung. Schließlich sind die Zackenschnittmesser technisch aufwendig herzustellen und somit auch die damit hergestellten Produkte teuer.

Aufgabe der Erfindung ist es, ein Klebeband mit guter Handeinreißbarkeit einerseits und einer hohen Festigkeit vor allem in Hinblick auf eine reißerfreie Entfernung des Klebebandes nach der Anwendung, zur Verfügung zu stellen, wobei das Klebeband die geschilderten Nachteile des Standes der Technik nicht aufweist.

Gelöst wird diese Aufgabe durch die Verwendung eines Klebebands, wie es im Hauptanspruch niedergelegt ist. Gegenstand der Unteransprüche sind vorteilhafte Weiterbildungen des Erfindungsgegenstands.

Demgemäß betrifft die Erfindung ein Klebeband mit einer quer zur Ablängrichtung weiterreißbaren Folie als Trägermaterial, auf die ein- oder beidseitig eine Klebemasse aufgetragen ist und bei der eine der beiden Längskanten eine rauhe Schnittkante in der Form aufweist, daß über den gesamten Bereich Einkerbungen in einer Häufigkeit von mindestens 1 Stück/mm vorhanden sind, wobei die Einkerbungen unregelmäßig angeordnet und von unterschiedlicher Tiefe sind, und die andere Längskante im wesentlichen glatt ist und diese Einkerbungen nicht oder in der Anzahl stark vermindert aufweist.

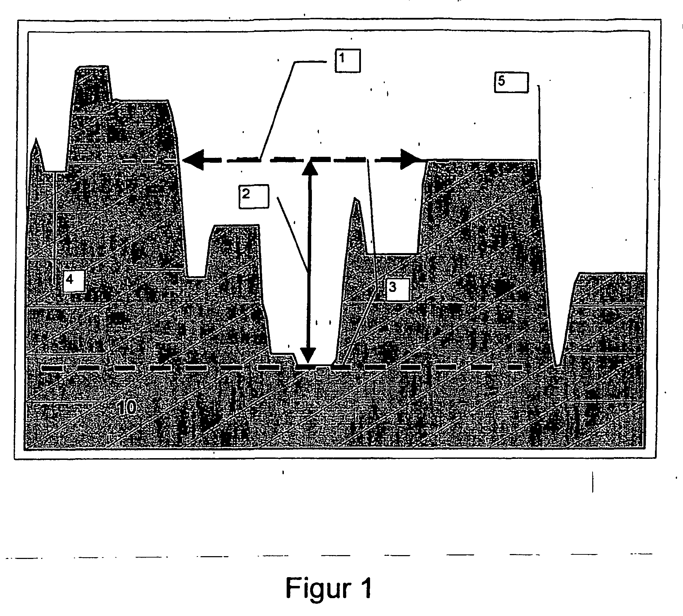

Eine Einkerbung im Randbereich des Klebebands 10, also an der Schnittkante 5, weist einen ungeraden, lokale Minima und lokale Maxima aufweisenden kurvenförmigen oder zackigen Verlauf auf und wird hier durch eine Breite 1 und einer dazugehörigen Tiefe 2 beschrieben (siehe Figur 1). Die Tiefe 2 einer Einkerbung wird hier als die Distanz zwischen zwei in Längsrichtung des Klebebandes parallel verlaufende Geraden bezeichnet, wovon die eine Gerade ein Minimum schneidet und die zweite ein Maximum. Bei einem gleichmäßig sinusförmigen Verlauf schneidet eine Gerade immer mehrere benachbarte lokale Minima 4 beziehungsweise Maxima.
Bei einem unregelmäßigem Verlauf ist dies normalerweise nicht der Fall, die Tiefe einer Einkerbung wird durch eine Gerade beschrieben, die nur durch ein einziges Maximum geht. Die von einer Einkerbung in Anspruch genommene Breite ist die Strecke zwischen den Schnittpunkten der Geraden durch ein Maximum einerseits und mit der Längskante des Klebebandes andererseits. Die Tiefe einer Einkerbung mit einer bestimmten Breite bezieht sich natürlich auf das Minimum mit der größten Distanz zwischen den Schnittpunkten.

In einer ersten vorteilhaften Ausführungsform der Erfindung sind größere und kleinere Einkerbungen vorhanden, wobei besonders bevorzugt die größeren Einkerbungen eine Tiefe von 15 bis 100 µm und die kleineren Einkerbungen eine Tiefe von 5 bis 15 µm aufweisen.

In einer weiteren vorteilhaften Ausführungsform der Erfindung sind die größeren Einkerbungen mit einer Häufigkeit von 1 bis 10 Stück/mm Kante und/oder die kleineren Einkerbungen mit einer Häufigkeit von 5 bis 30 Stück/mm Kante angeordnet.

In einer weiteren vorteilhaften Ausführungsform der Erfindung ist die Weiterreißkraft der Folie beschrieben durch die Schenkelweiterreiβkraft (EN ISO 13937-2 bei 100 mm/min Vorschubgeschwindigkeit)- vorteilhaft < 10N, insbesondere kleiner 1 N.

Die Einkerbungen stellen eine leichte Handeinreißbarkeit der Kante mit den Einkerbungen und damit eine leichtere Handeinreißbarkeit des gesamten Klebebandes in Querrichtung (bezogen auf Erstreckungsrichtung des Klebebands) sicher, was dem Verarbeiter ein Abreißen ohne hohen Kraftaufwand beziehungsweise ohne Zuhilfenahme von Hilfsmittel wie Schere oder Messer nach der Applikation ermöglicht. Dadurch ergibt sich eine erhebliche Zeitersparnis im Verarbeitungsprozeß. Die Einkerbungen sind durch die Unregelmäßigkeit der Einkerbungen weniger auffällig und schon so klein, daß sie mit bloßem Auge nicht oder nur schwer zu erkennen sind und damit ein ungewünschte Effekte hinsichtlich der Optik vermieden werden. Naturgemäß weist diese Seite eine erhöhte Anfälligkeit zum Abreißen beim Entfernen auf. Durch das Abziehen des Klebebandes von der Seite mit der glatten Schnittkante wird diese Anfälligkeit stark reduziert.

Überraschend und für den Fachmann völlig unerwartet zeigt ein Klebeband mit einer weiterreißbaren Folie als Trägermaterial, bei dem eine der beiden Längskanten eine rauhe Schnittkante in der Form aufweist, daß über den gesamten Bereich Einkerbungen mit einer Tiefe von 15 µm bis 100 µm in einer Häufigkeit von mindestens 1 Stück /mm vorhanden sind, eine hervorragende und selektive Eigenschaftskombination von exzellenter Handeinreißbarkeit einerseits und guter Trägerfestigkeit beim Abziehen andererseits auf.

Vorzugsweise werden als Material für die Folie BOPP, MOPP, PVC oder PET eingesetzt, die darüber hinaus in einer besonders vorteilhaften Ausführungsform der Erfindung eine Dicke von 20 bis 100 µm, insbesondere von 30 bis 60 µm, aufweist.

All diese aufgezählten Folien lassen sich als Trägerfolie erfindungsgemäß einsetzen. Eine vorteilhafte Ausführung der Erfindung stellt eine Folie dar, die farbig und/oder nicht transparent ist.

Weiterhin stellt eine hervorragende Ausgestaltung der Erfindung dar, wenn die Folie mit einer druckempfindlichen Klebemasse ausgerüstet ist.

In weiteren vorteilhaften Ausführungsformen der Erfindung beträgt der Auftrag an Klebemasse 15 bis 40 g/m², weiter vorzugsweise 15 bis 120 g/m².
Besonders vorzugsweise ist die Folie bedruckt, insbesondere dann, wenn nur eine Längskante mit den Einkerbungen versehen ist, um beispielsweise den Benutzer des Klebebands auf die leicht reißbare Kante hinzuweisen.

Das Klebeband besitzt eine geringe Dicke, eine hohe Zugfestigkeit (Höchstzugkraft), eine gute Dehnbarkeit (Reißdehnung), eine ausreichende aber nicht zu hohe Klebkraft, eine hohe Wasserfestigkeit und eine sehr gute Beständigkeit gegenüber Farbdurchschlag und Feuchtigkeit, eine dosierte Klebkraft auf der eigenen Rückseite sowie eine exzellente Handeinreißbarkeit.

Die Klebemasse der erfindungsgemäßen Klebebänder kann eine Selbstklebemasse, die aus der Gruppe der Naturkautschuke oder der Synthesekautschuke oder aus einem beliebigen Blend aus Naturkautschuken und/oder Synthesekautschuken besteht, enthalten, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS) und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvemetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vemetzer kann auch durch IR-Strahlen oder hochenergetische Wechselfelder erfolgen.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.
Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist dann zu sehen, daß diese einen hohen K-Wert und damit ein hohes Molekutargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.
Die Lösung der Masse kann 5 bis 80 Gew.-%, insbesondere 30 bis 70 Gew.-% Lösungsmittel enthalten. Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acryfathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.

Die Klebemasse auf Acrylathotmelt-Basis kann aber auch chemisch vernetzt sein. In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethem eingesetzt.
Der Restiösungsmittel-Gehaft sollte unter 1 Gew.% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal ® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Gegebenenfalls kann rückseitig ein Trennlack zur Verbesserung der Abrollbarkeit aufgebracht werden.

In bestimmten Fällen kann umgekehrt eine Behandlung der Rückseite mit einer Corona oder einem Lack zur Verbesserung der Haftung einer Farbe auf der Rückseite vorgenommen werden.

Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).
Auf den Inhalt des besagten Handbuchs wird hiermit Bezug genommen, und dessen Inhalt wird Teil dieser Offenbarung und Erfindung.

Besonders vorteilhaft läßt sich ein einseitig klebend ausgerüstetes Klebeband, wobei der Auftrag an Klebemasse vorzugsweise zwischen 15 bis 30 g/m² liegt, als Verpackungsklebeband verwenden.

Die Verpackungsklebebänder weisen insbesondere Lauflängen auf von 66, 100 und 1000 m. Als Breite der Rollen werden üblicherweise 18, 24, 36, 48, 50 und 72 mm gewählt.
Die bevorzugten Farben sind braun, weiß und transparent. Die Bedruckung erfolgt auf Rollen von 144 oder 150 mm Breite, die anschließend wieder auf die oben genannten Breiten geschnitten werden.

## Patentansprüche

1. Klebeband mit einer quer zur Ablängrichtung weiterreißbaren Folle als Trägermaterial, auf die ein- oder beidseitig eine Klebemasse aufgetragen ist und bei der eine der beiden Längskanten eine rauhe Schnittkante in der Form aufweist, dass über den gesamten Bereich Einkerbungen in einer Häufigkeit von mindestens 1 Stück/mm vorhanden sind, wobei die Einkerbungen unregelmäßig angeordnet und von unterschiedlicher Tiefe sind, und die andere Längskante im wesentlichen glatt ist und diese Einkerbungen nicht oder in der Anzahl stark vermindert aufweist, wobei
auf der über den gesamten Bereich eingekerbten, nicht glatten Seite größere und kleinere Einkerbungen vorhanden sind, wobei die größeren Einkerbungen eine Tiefe von 15 bis 100 µm und die kleineren Einkerbungen eine Tiefe von 5 bis 15 *µ*m aufweisen und wobei
die größeren Einkerbungen mit einer Häufigkeit von 1 bis 10 Stück/mm Kante und/oder die Kleineren Einkerbungen mit einer Häufigkeit von 5 bis 30 Stuck/mm Kante angeordnet sind.

2. Klebeband nach Anspruch 1, **dadurch gekennzeichnet, dass** die Weiterreißkräfte (Schenkelweiterreißkraft nach EN ISO 13937-2 bei 100 mm/min Vorschubgeschwindigkeit) im Mittel kleiner 10 N betragen.

3. Klebeband nach den Ansprüchen 1 oder 2, **dadurch gekennzeichnet, dass** als Material für die Folie PVC, BOPP, MOPP oder PET eingesetzt werden.

4. Klebeband nach zumindest einem der Ansprüche 1 bis 3, **dadurch gekennzeichnet, dass** die Folie eine Dicke von 20 bis 100 *µ*m aufweist.

5. Klebeband nach zumindest einem der Ansprüche 1 bis 4, **dadurch gekennzeichnet, dass** die Folie auf der Rückseite eine Bedruckung aufweist.

6. Klebeband nach zumindest einem der Ansprüche 1 bis 5, **dadurch gekennzeichnet, dass** die Folie zur Verankerung der Farbmasse auf dem Träger mit einem Primer ausgerüstet ist.

7. Klebeband nach zumindest einem der Anspruche 1 bis 6, **dadurch gekennzeichnet, dass** das Klebeband zwischen der Folle und der Masseschicht eine Bedruckung aufweist.

8. Klebeband nach zumindest einem der Ansprüche 1 bis 7, **dadurch gekennzeichnet, dass** das Klebeband durch eine Einfärbung der Klebmasse, der Primermasse und/oder der Folie farbig und/oder nicht transparent ist.

9. Verwendung eines Klebebands nach zumindest einem der Ansprüche 1 bis 8 als Verpackungsklebeband.

## Claims

1. Adhesive tape having a film backing material in which a tear can be propagated transversely with respect to the direction from which individual lengths of the tape are taken, an adhesive being applied to one or both sides of said backing material, and one of the two longitudinal edges having a rough cut edge such that over the entire area there are notches in a frequency of at least 1/mm, the notches being disposed irregularly and differing in depth, and the other longitudinal edge being substantially smooth and having no such notches or a greatly reduced number thereof, it being the case that on the side which is not smooth and which is notched over the entire area, there are larger and smaller notches, the larger notches having a depth of from 15 to 100 µm and the smaller notches having a depth of from 5 to 15 µm, and the larger notches being arranged with a frequency of from 1 to 10/mm of edge and/or the smaller notches are arranged with a frequency of from 5 to 30/mm of edge.

2. Adhesive tape according to Claim 1, **characterized in that** the tear propagation forces (tear propagation force determined on trouser-shaped test specimens according to EN ISO 13937-2 with a 100 mm/min advance speed) are on average less than 10 N.

3. Adhesive tape according to either of Claims 1 and 2, **characterized in that** PVC, BOPP, MOPP or PET is used as material for the film.

4. Adhesive tape according to at least one of Claims 1 to 3, **characterized in that** the film has a thickness of from 20 to 100 µm.

5. Adhesive tape according to at least one of Claims 1 to 4, **characterized in that** the film has printing on the reverse.

6. Adhesive tape according to at least one of Claims 1 to 5, **characterized in that** the film has been provided with a primer for the purpose of anchoring the colour composition on the backing.

7. Adhesive tape according to at least one of Claims 1 to 6, **characterized in that** the adhesive tape has printing between the film and the adhesive layer.

8. Adhesive tape according to at least one of Claims 1 to 7, **characterized in that** by virtue of the colouring of the adhesive, primer and/or film the adhesive tape is coloured and/or non-transparent.

9. Use of an adhesive tape as claimed in at least one of Claims 1 to 8 as a packaging tape.

## Revendications

1. Ruban adhésif comportant une feuille déchirable transversalement par rapport à la direction du déroulement en tant que matériau de support, sur laquelle est appliquée une masse adhésive sur une ou sur les deux faces et dont l'un des bords longitudinaux présente un bord de découpe irrégulier, tel que l'ensemble de la zone présente des encoches à une fréquence d'au moins 1 encoche par mm, les encoches étant agencées de manière irrégulière et étant de profondeurs différentes, et l'autre bord de découpe étant substantiellement lisse et ne présentant pas ces encoches ou en nombre fortement réduit, où sur le côté non lisse encoché sur toute la zone, sont présentes de plus grandes et de plus petites encoches, les plus grandes encoches ayant une profondeur de 15 à 100 *µ*m et les plus petites encoches une profondeur de 5 à 15 *µ*m, et où les plus grandes encoches sont agencées avec une fréquence de 1 à 10 encoches par mm de côté et/ou les plus petites encoches avec une fréquence de 5 à 30 encoches par mm de côté.

2. Ruban adhésif selon la revendication 1, **caractérisé en ce que** les forces de déchirement (force de déchirement sur éprouvette de type pantalon selon EN ISO 13937-2 à une vitesse d'avance de 100 mm/min.) est en moyenne de moins de 10 N.

3. Ruban adhésif selon la revendication 1 ou 2, **caractérisé en ce que** l'on met en oeuvre en tant que matériau de la feuille du PVC, du BOPP, du MOPP ou du PET.

4. Ruban adhésif selon au moins l'une quelconque des revendications 1 à 3, **caractérisé en ce que** la feuille présente une épaisseur de 20 à 100 µm.

5. Ruban adhésif selon au moins l'une quelconque des revendications 1 à 4, **caractérisé en ce que** la feuille présente une impression sur l'envers.

6. Ruban adhésif selon au moins l'une quelconque des revendications 1 à 5, **caractérisé en ce que** la feuille est munie d'une couche d'apprêt aux fins d'ancrage de la masse adhésive sur le support.

7. Ruban adhésif selon au moins l'une quelconque des revendications 1 à 6, **caractérisé en ce que** le ruban adhésif présente une impression entre la feuille et la couche de masse.

8. Ruban adhésif selon au moins l'une quelconque des revendications 1 à 7, **caractérisé en ce que** le ruban adhésif est rendu coloré et/ou non transparent par une coloration de la masse adhésive, de la masse d'apprêt et/ou de la feuille.

9. Utilisation d'un ruban adhésif selon au moins l'une quelconque des revendications 1 à 8 en tant que ruban adhésif d'emballage.
